# EUROPÄISCHE PATENTSCHRIFT

(11) **EP 2 702 095 B1**
(45) Veröffentlichungstag und Bekanntmachung des Hinweises auf die Patenterteilung: **03.10.2018**
(21) Anmeldenummer: 12716419.2
(22) Anmeldetag: 24.04.2012
(51) Int. Cl.: C08J 9/12, C08G 18/42, B29B 7/74, B29C 44/46

(54) **POLYURETHANSCHAUM UND VERFAHREN ZU SEINER HERSTELLUNG**
POLYURETHANE FOAM AND METHOD FOR PRODUCING SAME
MOUSSE POLYURÉTHANE ET PROCÉDÉ DE PRODUCTION DE CELLE-CI

(30) Priorität: 29.04.2011 DE 102011050014
(43) Veröffentlichungstag der Anmeldung: 05.03.2014
(73) Patentinhaber: Covestro Deutschland AG, 51373 Leverkusen (DE)
(72) Erfinder: STEINMEISTER, Dirk, 51377 Leverkusen (DE); MOERS, Stephan, 41379 Brüggen (DE); LINDNER, Stefan, 50670 Köln (DE); FRIEDERICHS, Wolfgang, 50933 Köln (DE); STRÄTER, Jürgen, 41539 Dormagen (DE)
(74) Vertreter: Levpat
(86) Internationale Anmeldenummer: PCT/EP2012/057433
(87) Internationale Veröffentlichungsnummer: WO 2012/146571

(56) Entgegenhaltungen:
- EP-A2- 0 353 061
- WO-A1-01/98389
- WO-A1-2011/054868

## Beschreibung

Die vorliegende Erfindung betrifft ein Verfahren zur Herstellung eines Polyurethanschaums, in dem aus einem Mischkopf durch eine Austragsleitung eine Mischung ausgetragen wird mit: A) eine gegenüber Isocyanaten reaktive Komponente; B) eine Tensidkomponente; C) eine Treibmittelkomponente ausgewählt aus der Gruppe umfassend lineare, verzweigte oder cyclische C₁-bis C₆-Kohlenwasserstoffe, lineare, verzweigte oder cyclische C₁- bis C₆-Fluorkohlenwasserstoffe, N₂, O₂, Argon und/oder CO₂, wobei das Treibmittel C) im überkritischen Zustand vorliegt; und D) eine Polyisocyanatkomponente. Die Erfindung betrifft weiterhin einen gemäß diesem Verfahren erhältlichen Polyurethanschaum.

Bei der Herstellung von Polyurethanschäumen wird eine Polyolkomponente, in welcher auch ein Treibmittel enthalten ist, mit einem Isocyanat zur Reaktion gebracht. Durch die Reaktion von Isocyanat mit Wasser entsteht Kohlendioxid, das auch als Treibmittel wirkt.

Der für die Schaumbildung und damit für die spätere Zellgröße des ausgehärteten Schaums entscheidende Schritt ist die Nukleierung von Treibmitteln, da jede Zelle im Schaum aus einer Gasblase entstanden ist. Hierbei ist zu beobachten, dass in der Regel nach der Nukleierung keine neuen Gasblasen entstehen, sondern Treibmittel in bereits bestehende Gasblasen hineindiffundiert.

Die Zugabe von Stabilisatoren unterstützt die Emulgierung der verschiedenen Komponenten, beeinflusst die Nukleierung und verhindert die Koaleszenz der wachsenden Gasblasen. Außerdem beeinflussen sie die Zellöffnung. Bei offenzelligen Schäumen werden die Membranen der wachsenden Poren geöffnet und die Stege der Poren bleiben bestehen.

Die schlagartige Entspannung CO₂-haltiger Reaktionsmischungen wird in WO 2001/98389 A1 beschrieben. Diese Patentanmeldung betrifft ein Verfahren zur Herstellung von Polyurethan-Blockschaum, wobei eine Kohlendioxid enthaltende Polyurethan-Reaktivmischung plötzlich von einem Druck oberhalb des Gleichgewichtslösungsdruckes des Kohlendioxids auf Normaldruck entspannt wird. Die flüssige Polyurethan-Reaktivmischung wird unter Freisetzung von gelöstem Kohlendioxid aufschäumt, die aufgeschäumte Mischung wird auf ein Substrat aufgebracht und anschließend zum Blockschaum ausgehärtet. Das Kohlendioxid wird zunächst bei einem wesentlich oberhalb des Gleichgewichtslösungsdruckes liegenden Druck in der Reaktivmischung oder mindestens einer der Komponenten Polyol und Isocyanat vollständig gelöst. Anschließend wird der Druck auf einen Druck nahe des Gleichgewichtslösungsdruckes herabgesetzt, wobei zwischenzeitlich der Gleichgewichtslösungsdruck unter Freisetzung geringer Mengen des Kohlendioxids unter Bildung einer Blasen-Mikrodispersion unterschritten wird, gegebenenfalls die Komponenten gemischt werden und die plötzliche Druckherabsetzung auf Normaldruck erfolgt, bevor das freigesetzte Kohlendioxid wieder vollständig aufgelöst wird. Allerdings finden sich hier keine Hinweise auf nanozelluläre Schäume oder überkritische Bedingungen für das Treibmittel.

US 2004/0054022 A1 offenbart ein Herstellungsverfahren für Polyurethan-Hartschaum mit einem mittleren Verhältnis von Längs- und Querschnittdurchmesser der Zellen von 1,0 bis 1,4 und einer Dichte von 20 bis 40 kg/m³. Aus der Reaktion von Wasser und Polyisocyanaten erzeugtes CO₂ sowie überkritisches, unterkritisches oder flüssiges CO₂ wird als Treibmittel eingesetzt. Vor dem Vermischen mit dem Polyisocyanat wird Wasser und besagtes CO₂ im flüssigen Zustand dem Polyol beigefügt. Bevorzugte Gehalte für den CO₂-Anteil liegen zwischen 0,5% und 3%. Dieses lässt sich vor dem Hintergrund verstehen, dass bei größeren Mengen von CO₂ eine schlagartige Verdampfung zu befürchten wäre.

Die Verwendung von CO₂ als physikalischem Treibmittel zur Herstellung von Polyurethan-Weichschäumen ist beispielsweise unter dem Namen Novaflex®-Verfahren der Firma Hennecke bekannt.

Hierbei ist eine aufwendige Entspannungstechnik nötig und die Menge an CO₂ ist begrenzt. Hierzu wird in Veröffentlichung FAPU (Fachmagazin für die Polyurethanindustrie) 59 (2010) 2, S. 33-35, geschrieben: "Bisherige Untersuchungen seitens der Maschinen- und Rohstoffhersteller haben allerdings gezeigt, dass der maximale Treibmittelgehalt von gelöstem CO₂ auf ca. 2 Gew.-% in der Polyolkomponente beschränkt bleibt, da ansonsten die Expansion des Schaums bei Hochdruckvermischung bereits im Mischkopf nicht mehr kontrollierbar abläuft, wodurch keine homogene Zellstruktur erzielt werden kann".

In DE 4442 254 A1 wird ein Verfahren zur Herstellung von Schaumstoffen aus Zweikomponenten-Reaktivkunststoffen beschrieben unter Einsatz von Kohlendioxid als Treibmittel durch Vermischen von mindestens einer der Reaktivkomponenten mit Kohlendioxid unter Druck, Vermischen der Komponenten, von denen mindestens eine Kohlendioxid unter Druck enthält, Entspannen der durch Vermischen erhaltenen Kohlendioxid enthaltenden Reaktivmischung und Aushärten. Die Entspannung wird plötzlich unter Erzeugung von hohen Schergeschwindigkeiten durchgeführt. Da das Kohlendioxid gelöst ist, muss eine kontrollierte, induzierte Erzeugung von Blasenkeimen "im Augenblick des Übergangs der flüssigen Reaktivmischung aus einem an gelöstem Kohlendioxid untersättigten Zustand in einen an Kohlendioxid übersättigten Zustand erfolgen, d.h. im Augenblick der Entspannung von einem Druck, der oberhalb des Sättigungsdruckes für das gelöste Kohlendioxid liegt, auf einen Druck, der unterhalb des Sättigungsdruckes für das gelöste Kohlendioxid liegt". Die Differenz des Druckes vor und hinter dem Spalt beträgt typischerweise zwischen 5 und 20 bar, was deutlich unter dem überkritischen Druck des Kohlendioxids von 74 bar liegt.

WO 96/02376 A1 beschreibt ein Verfahren und eine Vorrichtung zur Schaumherstellung mittels unter Druck gelösten Kohlendioxids. Da das Kohlendioxid gelöst ist, müssen auch hier Blasenkeime erzeugt werden. Dies wird durch die Verwendung mindestens eines Spaltgitters mit engem Spaltabstand gelöst.

WO 01/10623 A1 beschreibt ein Verfahren und eine Vorrichtung zur Herstellung von Polyurethanschäumen. Hierbei wird das Kohlendioxid durch Druck im gelösten Zustand gehalten. Die Keimbildung wird durch die Erzeugung von Turbulenzen erreicht.

Wünschenswert wären weiter verbesserte Verfahren zur Herstellung von Polyurethan-Hartschäumen. Die vorliegende Erfindung hat sich daher die Aufgabe gestellt, ein solches Verfahren anzugeben, bei dem auch höhere Gehalte insbesondere des Treibmittels CO₂ kontrolliert und unter Ausbildung einer homogenen Zellstruktur eingesetzt werden können.

Erfindungsgemäß wird diese Aufgabe gelöst durch ein Verfahren zur Herstellung eines Polyurethanschaums, umfassend die Schritte:
- Bereitstellen einer Mischung in einem Mischkopf, wobei die Mischung umfasst:
   A) eine gegenüber Isocyanaten reaktive Komponente;
   B) eine Tensidkomponente;
   C) eine Treibmittelkomponente ausgewählt aus der Gruppe umfassend lineare, verzweigte oder cyclische C₁- bis C₆-Kohlenwasserstoffe, lineare, verzweigte oder cyclische C₁- bis C₆-Fluorkohlenwasserstoffe, N₂, O₂, Argon und/oder CO₂, wobei das Treibmittel C) im überkritischen Zustand vorliegt; und
   D) eine Polyisocyanatkomponente;
- Austragen der Mischung umfassend A), B), C) und D) aus dem Mischkopf durch eine Austragsleitung.

Das Verfahren zeichnet sich dadurch aus, dass die gegenüber Isocyanaten reaktive Komponente A) eine Hydroxylzahl von ≥ 100 mg KOH/g bis ≤ 1000 mg KOH/g aufweist, dass die Treibmittelkomponente C) zumindest teilweise in Form einer Emulsion vorliegt und dass in der Austragsleitung mit einer Öffnung oder mehreren Öffnungen versehene Mittel angeordnet sind, um den Strömungswiderstand beim Austragen der Mischung umfassend A), B), C) und D) zu erhöhen, wobei die Querschnittsfläche der Öffnung oder die Summe der Querschnittsflächen aller Öffnungen ≥ 0,5% bis ≤ 10% der inneren Querschnittsfläche der Austragsleitung beträgt.

Es wurde überraschenderweise gefunden, dass durch die Verwendung einer nicht einphasigen Polyol-Treibmittel-Mischung in Kombination mit einer Vorrichtung zur Gegendruckhaltung und/oder Druckerhöhung im Auslaufsystem des Mischkopfs und anschließender Entspannung auf Umgebungsdruck die Nachteile im Stand der Technik überwunden werden können und feinzellige Polyurethan-Hartschäume mit geringer Dichte erhalten werden können.

Beim Austragen der Mischung wird hinter den in der Austragsleitung befindlichen Mittel zur Erhöhung des Strömungswiderstands der in der Mischung herrschende Druck letztendlich auf Atmosphärendruck erniedrigt. Unter Atmosphärendruck ist hierbei insbesondere ein Druck von ≥ 0,9 bar bis ≤ 1,1 bar zu verstehen. Hierbei geht das Treibmittel in den unterkritischen und vorzugsweise in den gasförmigen Zustand über. Beispielsweise kann das Reaktionsgemisch einfach in eine offene Form eingebracht werden oder kontinuierlich für die Herstellung von Platten, wie zum Beispiel durch Freischaumanlagen oder Doppeltransportanlagen, genutzt werden.

In (und vorzugsweise am Ende) der Austragsleitung angeordnete Mittel, um den Strömungswiderstand beim Austragen der Mischung umfassend die Komponenten A), B), C) und D) zu erhöhen, können beispielsweise in Strömungsrichtung gesehen nach einer Mischkammer des Mischkopfs angeordnete Lochblenden, Gitter, Spaltgitter und/oder Siebe sein. Durch die Erhöhung des Strömungswiderstandes kann gezielt der Druck beeinflusst werden, den die Reaktionsmischung vor dem Austragen aus dem Mischkopf aufweist. Der so eingestellte Druck kann niedriger sein als der Druck beim Mischen der Komponenten der Reaktionsmischung. Auf diese Weise kann auf die Bildung und Expansion von Treibmitteltröpfchen oder Treibmittelbläschen Einfluss genommen werden. Solche Mittel werden beispielsweise in WO 2001/98389 A1 beschrieben.

Die eine Öffnung oder die mehreren Öffnungen weisen eine Querschnittsfläche auf. Hierunter ist die Fläche der Öffnung zu verstehen, die senkrecht zur Längsrichtung des Auslaufrohres ist und somit senkrecht zur Fließrichtung der Reaktionsmischung. Im Endergebnis gibt diese Querschnittsfläche somit die Fläche an, durch die die Reaktionsmischung beim Austragen in die Umgebung durchströmt.

Genauso weist die Austragsleitung einen Innendurchmesser und somit auch eine innere Querschnittsfläche auf, welche senkrecht zur Fließrichtung der Reaktionsmischung steht.

In einem einfachen Beispiel ist die vom Mischkopf kommende Austragsleitung ein zylindrisches, gegebenenfalls abgewinkeltes Rohr mit einem Innendurchmesser von ≥ 5 mm bis ≤ 15 mm, welches an ihrem Ende eine Lochblende mit einem kreisförmigen Loch von ≥ 0,5 mm bis ≤ 1,5 mm Durchmesser aufweist.

Die OH-Zahl der Komponente A) gibt im Falle eines einzelnen zugesetzten Polyols dessen OH-Zahl an. Im Falle von Mischungen wird die mittlere OH-Zahl angegeben. Dieser Wert kann im Rahmen der vorliegenden Erfindung allgemein anhand von DIN 53240 bestimmt werden. Je höher die OH-Zahl liegt, desto schlechter löst sich insbesondere das Treibmittel CO₂ in der Polyolmischung. Dieses ist erfindungsgemäß gewollt, da Treibmittelemulsionen angestrebt werden. Bevorzugte Werte für die OH-Zahlen der Komponente A) sind ≥ 200 mg KOH/g bis ≤ 600 mg KOH/g und besonders bevorzugt ≥ 300 mg KOH/g bis ≤ 550 mg KOH/g.

Für das erfindungsgemäße Verfahren geeignete Tenside B) unterliegen zunächst hinsichtlich ihrer Auswahl keinen Beschränkungen. Günstigerweise erlauben es die Tenside dem Treibmittel, in der gegenüber Isocyanaten reaktiven Phase Emulsionen oder Mikroemulsionen zu bilden. Tenside sind beispielsweise alkoxylierte Alkanole wie Ether von linearen oder verzweigten Alkanolen mit ≥ 6 bis ≤ 30 Kohlenstoffatomen mit Polyalkylenglykolen mit ≥ 5 bis ≤ 100 Alkylenoxideinheiten, alkoxylierte Alkylphenole, alkoxylierte Fettsäuren, Carbonsäureester eines alkoxylierten Sorbitans (insbesondere Polysorbat 80), Fettsäureester, Polyalkylenamine, Alkylsulfate, Phosphatidylinositole, fluorierte Tenside, Polysiloxangruppen umfassende Tenside und/oder Bis(2-ethyl-1-hexyl)sulfosuccinat. Fluorierte Tenside können perfluoriert oder teilfluoriert sein. Beispiele hierfür sind teilfluorierte ethoxylierte Alkanole oder Carbonsäuren.

Erfindungsgemäß ist vorgesehen, dass die Treibmittelkomponente C) zumindest teilweise in Form einer Emulsion vorliegt.

In der Herstellung des Polyurethanschaums wird überkritisches Treibmittel C) verwendet. Ohne auf eine Theorie festgelegt zu sein, wird angenommen, dass durch die Wahl von geeigneten Tensidkomponenten sich Emulsionen oder Mikroemulsionen des überkritischen Treibmittels in der Phase mit gegenüber Isocyanaten reaktiven Komponenten bilden.

Das Treibmittel kann vorzugsweise eine eigene Phase in der Reaktionsmischung bilden. Es kann beispielsweise überkritisches Kohlendioxid verwendet werden. Es ist möglich, dass das Kohlendioxid während der Reaktion zum Polyurethanschaum gebildet wird, beispielsweise durch die Reaktion von Isocyanaten mit Wasser oder mit Säuren. Beispiele für weitere Treibmittel sind lineare C₁-C₆-Kohlenwasserstoffe, verzweigte C₄-C₆-Kohlenwasserstoffe und cyclische C₃-C₆-Kohlenwasserstoffe. Spezielle Beispiele für Treibmittel sind Methan, Ethan, Propan, n-Butan, iso-Butan, n-Pentan, iso-Pentan, Cyclopentan, iso-Hexan, und/oder Cyclohexan. Weitere Beispiele sind die teil- oder perfluorierten Derivate von Methan, Ethan, Propan, n-Butan, iso-Butan, n-Pentan, iso-Pentan, Cyclopentan, Hexan, iso-Hexan, 2,3-Dimethylbutan und/oder Cyclohexan. Vorzugsweise wird Kohlendioxid oder eine Treibmittelmischung mit mehr als 30 Gewichts-%, bevorzugt mehr als 50 Gewichts-% und besonders bevorzugt mehr als 70 Gewichts-% Kohlendioxid verwendet.

Der Anteil des Treibmittels in der Reaktionsmischung umfassend Komponenten A), B) und C), aber ohne D), kann beispielsweise ≥ 5 Gewichts-% bis ≤ 40 Gewichts-% betragen.

Die Komponente D) ist ein Polyisocyanat, also ein Isocyanat mit einer NCO-Funktionalität von ≥ 2. Folglich liegt nun ein Reaktionsgemisch vor, welches zu Polyurethan- oder aber auch Polyisocyanuratschäumen reagieren kann. Dieses Reaktionsgemisch kann direkt in einem Mischkopf erzeugt werden.

Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C₁ bis C₆-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass das Isocyanat ein Prepolymer ist, welches erhältlich ist durch Reaktion eines Isocyanats mit einer NCO-Funktionalität von ≥ 2 und Polyolen mit einem Molekulargewicht von ≥ 62 g/mol bis ≤ 8000 g/mol und OH-Funktionalitäten von ≥ 1,5 bis ≤ 6.

Selbstverständlich können in der Herstellung des Polyurethanschaums noch weitere übliche Hilfs- und Zusatzstoffe wie Katalysatoren, Flammschutzmittel, Trennmittel, Füllstoffe und dergleichen eingesetzt werden.

Die Anzahl der NCO-Gruppen in der Polyisocyanatkomponente D) und die Anzahl der gegenüber Isocyanaten reaktiven Gruppen der Komponente A) können beispielsweise in einem Zahlenverhältnis von ≥ 50:100 bis ≤ 500:100 zueinander stehen. Diese Kenngröße kann auch in einem Bereich von ≥ 160:100 bis ≤ 330:100 oder aber auch von ≥ 80:100 bis ≤ 140:100 liegen.

Die Mischung umfassend die Komponenten A), B), C) und D) kann beispielsweise erhalten werden, indem in einem Hochdruck-Mischkopf unter für das Treibmittel überkritischen Bedingungen alle Komponenten mit Ausnahme der Polyisocyanatkomponente vorgelegt werden und dann mit dem Polyisocyanat D) versetzt werden.

Geeignete Drücke im Mischkopf und/oder in der Austragsleitung (vor den mit einer Öffnung oder mehreren Öffnungen versehenen Mitteln, um den Strömungswiderstand beim Austragen der Mischung umfassend A), B), C) und D) zu erhöhen) für die Herstellung des Polyurethanschaums können beispielsweise im Bereich von ≥ 40 bar bis ≤ 300 bar und vorzugsweise im Bereich von ≥ 60 bar bis ≤ 250 bar liegen. Geeignete Temperaturen sind beispielsweise ≥ 10 °C bis ≤ 80 °C und vorzugsweise ≥ 25 °C bis ≤ 60 °C. Insbesondere bevorzugt sind Drücke und Temperaturen oberhalb des kritischen Punktes von CO₂, also ≥ 73,7 bar und ≥ 31 °C.

Geeignete NCO-reaktive Komponenten A) sind insbesondere Polyole, Polyamine, Polyaminoalkohole und Polythiole.

Beispiele für Polyamine sind Ethylendiamin, 1,2- und 1,3-Diaminopropan, 1,4-Diaminobutan, 1,6-Diaminohexan, Isophorondiamin, ein Isomerengemisch von 2,2,4- und 2,4,4-Trimethylhexamethylendiamin, 2-Methylpentamethylendiamin, Diethylentriamin, 1,3- und 1,4-Xylylendiamin, α, α, α', α'-Tetramethyl-1,3- und -1,4-xylylendiamin und 4,4'-Diaminodicyclohexylmethan, Diethylmethylbenzoldiamin (DETDA), 4,4'-Diamino-3,3'-dichlordiphenylmethane (MOCA), Dimethylethylendiamin, 1,4-Bis(aminomethyl)cyclohexan, 4,4'-Diamino-3,3'-dimethyldicyclohexylmethan und 4,4'-Diamino-3,5-diethyl-3',5'-diisopropyldicyclohexylmethan. Weiterhin geeignet sind polymere Polyamine wie Polyoxyalkylenamine.

Beispiele für Aminoalkohole sind N-Aminoethylethanolamin, Ethanolamin, 3-Aminopropanol, Neopentanolamin und Diethanolamin.

Beispiele für Polythiole sind Di(2-mercaptoethyl)ether, Pentaerythritoltetrakisthioglycolat, Pentaerythritoltetrakis(3 -mercaptopropionat) und 1,2-Bis((2-mercaptoethyl)thio)-3 -mercaptopropan.

Die Polyole können beispielsweise ein zahlenmittleres Molekulargewicht Mₙ von ≥ 62 g/mol bis ≤ 8000 g/mol, bevorzugt von ≥ 90 g/mol bis ≤ 5000 g/mol und mehr bevorzugt von ≥ 92 g/mol bis ≤ 1000 g/mol aufweisen.

Die durchschnittliche OH-Funktionalität der genannten Polyole ist zum Beispiel ≥ 2, beispielsweise in einem Bereich von ≥ 2 bis ≤ 6, vorzugsweise von ≥ 2,1 bis ≤ 4 und mehr bevorzugt von ≥ 2,2 bis ≤ 3.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxide und/oder Epichlorhydrins an di- oder polyfunktionelle Startermoleküle.

Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Geeignete Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(l,3), Butandiol(1,4), Hexandiol(1,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit CO₂ erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller insbesondere trifunktioneller Startermoleküle enthalten.

Startermoleküle sind zum Beispiel Diole mit zahlenmittleren Molekulargewichten Mₙ von vorzugsweise ≥ 18 g/mol bis ≤ 400 g/mol oder von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, Octandiol-1,8, 1,10-Decandiol, 2-Methyl-1,3-propandiol, 2,2-Dimethyl-1,3-propandiol, 3-Methyl-1, 5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von ≥ 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 62 g/mol bis ≤ 400 g/mol oder von ≥ 92 g/mol bis ≤ 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Polyacrylatpolyole können durch radikalische Polymerisation von Hydroxylgruppen aufweisenden, olefinisch ungesättigten Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

Als Beispiel für eine Rezeptur liegen die Komponenten A), B), C), und D) in den folgenden Mengen vor:
A) ≥ 25 Gewichts-% bis ≤ 45 Gewichts-%
B) ≥ 0,5 Gewichts-% bis ≤ 15 Gewichts-%
C) ≥ 4 Gewichts-% bis ≤ 40 Gewichts-%
D) ≥ 30 Gewichts-% bis ≤ 70 Gewichts-%.

Hierbei addieren sich die Angaben in Gewichts-% zu ≤ 100 Gewichts-%. Bevorzugte Mengen der Komponenten sind:
A) ≥ 30 Gewichts-% bis ≤ 40 Gewichts-%
B) ≥ 1 Gewichts-% bis ≤ 5 Gewichts-%
C) ≥ 6 Gewichts-% bis ≤ 20 Gewichts-%
D) ≥ 40 Gewichts-% bis ≤ 60 Gewichts-%.

Das erfindungsgemäße Verfahren wird nachfolgend anhand von bevorzugten Ausführungsformen geschildert. Sie können beliebig kombiniert werden, sofern sich aus dem Kontext nicht das Gegenteil ergibt.

In einer Ausführungsform beträgt die Querschnittsfläche der Öffnung oder die Summe der Querschnittsflächen aller Öffnungen ≥ 0,7% bis ≤ 2,5% der inneren Querschnittsfläche der Austragsleitung. Vorzugsweise liegt eine Öffnung in Form einer Austrittsdüse vor.

In einer weiteren Ausführungsform beträgt der Quotient des Volumens einer Reaktionskammer innerhalb und/oder außerhalb des Mischkopfs, in der überkritische Bedingungen herrschen, und der Querschnittsfläche der Öffnung oder der Summe der Querschnittsflächen aller Öffnungen ≥ 5 m bis ≤ 200 m.

Die Reaktionskammer kann innerhalb des Mischkopfs durch dessen Mischkammer gebildet werden. Außerhalb des Mischkopfs kann die Reaktionskammer durch den Teil der Austragsleitung gebildet werden, welcher vor den Mitteln zur Erhöhung des Strömungswiderstands beim Austragen der Mischung umfassend A), B), C) und D) liegt. Im einfachsten Fall trägt folglich das Volumen der Austragsleitung vor einer Lochblende zum Volumen der Reaktionskammer bei.

Mit den angegebenen Quotienten kann die Strömung des Gemisches durch den Aufbau von Viskosität während der PU-Reaktion günstig beeinflusst werden. Bevorzugte Quotienten sind ≥ 10 m bis ≤ 100 m.

In einer weiteren Ausführungsform beträgt beim Austragen der Mischung umfassend A), B), C) und D) aus den mit einer Öffnung oder mehreren Öffnungen versehenen Mitteln zur Erhöhung des Strömungswiderstandes der Quotient des Volumenstroms der ausgetragenen Mischung und der Querschnittsfläche der Öffnung oder der Summe der Querschnittsflächen aller Öffnungen ≥ 5 m/s bis ≤ 400 m/s.

Auch mit diesen angegebenen Quotienten kann die Strömung des Gemisches durch den Aufbau von Viskosität während der PU-Reaktion günstig beeinflusst werden. Bevorzugte Quotienten sind ≥ 40 m/s bis ≤ 200 m/s.

In einer weiteren Ausführungsform herrscht nach dem Bereitstellen der Mischung im Mischkopf ein Druck von ≥ 40 bar bis ≤ 150 bar. Dieser Zustand kann insbesondere in einem Mischkopf und nach einem Mischkopf herrschen. Der Druck kann auch ≥ 80 bar bis ≤ 120 bar oder ≥ 60 bar bis ≤ 100 bar betragen. Bei solchen Drücken können überkritische Bedingungen für das eingesetzte Treibmittel aufrecht erhalten werden.

In einer weiteren Ausführungsform beträgt die Verweilzeit der Mischung im Mischkopf unter überkritischen Bedingungen des Treibmittels ≥ 0 Sekunden bis ≤ 20 Sekunden, bevorzugt von ≥ 0,1 Sekunden bis ≤ 10 Sekunden und besonders bevorzugt von ≥ 0,5 Sekunden bis ≤ 5 Sekunden. Dies führt dazu, dass die Mischung unter überkritischen Bedingungen polymerisieren kann. Die Verweilzeit kann durch das Volumen der Reaktionskammer (= Gesamtvolumen der Mischkammer mit Auslaufrohr bis zu der Position der Lochblende) in der überkritische Bedingungen herrschen, geteilt durch das Volumen der Mischung, die in einer bestimmten Zeiteinheit gefördert wird, bestimmt werden.

In einer weiteren Ausführungsform umfasst die gegenüber Isocyanaten reaktive Komponente A) ein Polyetheresterpolyol mit einer Hydroxylzahl von ≥ 200 mg KOH/g bis ≤ 600 mg KOH/g und ein kurzkettiges Polyol mit einer Hydroxylzahl von ≥ 800 mg KOH/g. Geeignete Polyetheresterpolyole sind unter anderem bifunktionelle Polyetheresterpolyol, welche durch Addition von Alkylenoxiden und insbesondere Ethylenoxid an eine Mischung aus Phthalsäureanhydrid, Diethylenglycol und Ethylendiamin erhalten werden und eine OH-Zahl von ≥ 275 mg KOH/g bis ≤ 325 mg KOH/g aufweisen.

Solche Produkte mit dem Handelsnamen Desmophen® VP.PU 1431 sind von der Firma Bayer MaterialScience AG erhältlich. Die OH-Zahl des Polyesterpolyols kann auch ≥ 290 mg KOH/g bis ≤ 320 mg KOH/g betragen. Kurzkettige Polyole sind insbesondere Polyole mit ≥ 2 bis ≤ 6 C-Atomen. Bevorzugt ist Glycerin. Dieses hat eine OH-Zahl von 1827 mg KOH/g. Durch die Zugabe des kurzkettigen Polyols lässt sich die Polarität der Polyolphase günstig erhöhen.

In einer weiteren Ausführungsform umfasst die Tensidkomponente B) ein Polysiloxan-Polyoxyalkylen-Copolymer. Vorzugsweise handelt es sich bei dem Polysiloxan-Polyoxyalkylen-Copolymer (Silikon-Glykol-Copolymer) um solche Verbindungen, die unter der CAS-Nummer 87244-72-2 registriert sind.

In einer weiteren Ausführungsform beträgt der Anteil der Treibmittelkomponente C) ≥ 4 Gewichts-% bis ≤ 12 Gewichts-%, bezogen auf das Gesamtgewicht der Mischung. Bevorzugte Anteile sind ≥ 6 Gewichts-% bis ≤ 10 Gewichts-% und besonders bevorzugte Anteile sind ≥ 7 Gewichts-% bis ≤ 9 Gewichts-%.

In einer weiteren Ausführungsform umfasst die Polyisocyanatkomponente D) monomeres und/oder polymeres Diphenylmethan-4,4'-diisocyanat. Solch ein Polyisocyanat ist unter dem Handelsnamen Desmodur ® 44V70L als ein Gemisch von Diphenylmethan-4,4'-diisocyanat (MDI) mit Isomeren und höherfunktionellen Homologen von der Firma Bayer MaterialScience erhältlich.

Ein weiterer Gegenstand der vorliegenden Erfindung ist ein Polyurethanschaum, der durch ein erfindungsgemäßes Verfahren erhältlich ist oder erhalten wurde.

In einer Ausführungsform weist der Polyurethanschaum eine Rohdichte von ≥ 20 kg/m³ bis ≤ 160 kg/m³ auf. Die Rohdichte kann gemäß DIN EN 1602 bestimmt werden und beträgt vorzugsweise ≥ 30 kg/m³ bis ≤ 120 kg/m³ und mehr bevorzugt von ≥ 40 kg/m³ bis ≤ 80 kg/m³ aufweisen. Bevorzugte Verwendungen für den erfindungsgemäßen Schaum liegen in der Wärmeisolierung.

Die vorliegende Erfindung wird anhand der nachfolgenden Beispiele weiter erläutert, ohne jedoch darauf beschränkt zu sein.

### Glossar:

Desmophen® VP.PU 1431: bifunktionelles Polyetheresterpolyol, EO-Addukt an eine Mischung aus Phthalsäureanhydrid, Diethylenglycol und Ethylendiamin mit einer OH-Zahl von 275 bis 325 mg KOH/g und einer Viskosität von 6,5 +/- 1,3 Pa s bei 25 °C; Bayer MaterialScience AG.

DABCO® DC198: Produkt der Firma Air Products; Stabilisator/Tensid. DABCO® DC198 ist ein Polysiloxan-Polyoxyalkylen-Copolymer (Silikon-Glykol-Copolymer). Solche Verbindungen sind unter der CAS-Nummer 87244-72-2 registriert.

DBTL: Dibutylzinndilaurat.

Desmorapid® 726b: Katalysator der Firma Bayer MaterialScience AG.

Desmodur® 44V70L: Gemisch von Diphenylmethan-4,4'-diisocyanat (MDI) mit Isomeren und höherfunktionellen Homologen der Firma Bayer MaterialScience AG.

### Beispiel 1 bis Beispiel 4 sowie Vergleichsbeispiele Vergleich 1 bis Vergleich 2:

Gemäß den in der nachfolgenden Tabelle 1 aufgeführten Rezepturen wurden CO₂-getriebene Polyurethanschäume hergestellt. Wenn nicht anders vermerkt, sind Mengenangaben als Gewichtsteile zu verstehen. Die Mischung aus der gegenüber Isocyanaten reaktiven Verbindung A) wurde mit Zusatzkomponenten wie Tensiden B) und Katalysatoren gemischt. Diese wurde in einer Standard-Hochdruckmischanlage als Polyolkomponente eingesetzt und bei einem Druck von 120 bar mit dem Treibmittel C) vermischt. Hierbei herrschten für das Treibmittel überkritische Bedingungen. In einem Hochdruckmischkopf wurde diese Mischung mit einem Polyisocyanat D), das mit einem Druck von 120 bar gefördert wurde, vermischt. Unter den im Mischkopf herrschenden Bedingungen lag das Treibmittel zumindest teilweise in Form einer Emulsion vor.

Die Schussmenge betrug 60 g/s, entsprechend einem Volumenstrom von 72 ml/s (Dichte der Mischung 1,2 g/ml). Das Auslaufrohr des Mischkopfes hatte einen Innendurchmesser von 8,5 mm und eine Länge von ca. 50 cm. Das Gesamtvolumen der Mischkammer mit Auslaufrohr bis zu der Position der Lochblende war 36 ml. In den Beispielen war im Auslaufrohr nach dem Mischkopf eine Lochblende mit einer in den Tabellen angegebenen Lochgröße vorgesehen. Auf diese Weise konnte der Druck im Mischkopf gezielt eingestellt werden und eine langsamere Druckabsenkung in der Reaktionsmischung erreicht werden.

Die Vergleichsbeispiele 1 und 2, bei denen im Gegensatz zu den Beispielen 1 bis 4 gezielt ein niedriger Druck eingestellt wurde, haben eine deutlich höhere Rohdichte. Dies zeigt, dass hier das Treibmittel deutlich schlechter genutzt werden konnte.

**Tabelle 1**

| | **Beispiel 1** | **Beispiel 2** | **Beispiel 3** | **Beispiel 4** | **Vergleich 1** | **Vergleich 2** |
|---|---|---|---|---|---|---|
| Desmophen® VP.PU 1431 | 95,00 | 95,00 | 95,00 | 95,00 | 95,00 | 95,00 |
| Glyzerin | 15,00 | 15,00 | 15,00 | 15,00 | 15,00 | 15,00 |
| DABCO® DC198 | 2,00 | 2,00 | 2,00 | 2,00 | 2,00 | 2,00 |
| DBTDL | 0,06 | 0,06 | 0,06 | 0,06 | 0,06 | 0,06 |
| Desmorapid® 726b | 0,30 | 0,30 | 0,30 | 0,30 | 0,30 | 0,30 |
| | | | | | | |
| CO₂ | 27,50 | 27,50 | 28,60 | 28,60 | 28,60 | 27,50 |
| | | | | | | |
| Desmodur® 44V70L | 137,89 | 137,89 | 151,67 | 151,67 | 151,67 | 137,89 |
| | | | | | | |
| Kennzahl | 100,00 | 100,00 | 110,00 | 110,00 | 110,00 | 100,00 |
| Isocyanat-Temp. [°C] | 36 | 35 | 35 | 35 | 35 | 34 |
| Polyoltemperatur [°C] | 35 | 34 | 34 | 34 | 34 | 34 |
| OH-Zahl der Komponente A) [mg KOH/g] | 517 | 517 | 517 | 517 | 517 | 517 |
| Schusszeit [s] | 10 | 10 | 10 | 10 | 10 | 10 |
| Gegendruck [bar] | 95-87 | 92-78 | 81-75 | 50-40 | 2,6-2 | 2,8-2,1 |
| Lochblende [mm] | 0,8 | 1,2 | 0,8 | 1,2 | ohne | ohne |
| Rohrdurchmesser [mm] | 8,5 | 8,5 | 8,5 | 8,5 | 8,5 | 8,5 |
| Verweilzeit der Mischung unter überkritischen Bedingungen [s] | 0,5 | 0,5 | 0,5 | 0,5 | keine | keine |
| Freie Dichte Kern [kg/m³] | 94 | 101 | 113 | 90 | 238 | 223 |

## Patentansprüche

1. Verfahren zur Herstellung eines Polyurethanschaums, umfassend die Schritte:
- Bereitstellen einer Mischung in einem Mischkopf, wobei die Mischung umfasst:
A) eine gegenüber Isocyanaten reaktive Komponente;
B) eine Tensidkomponente;
C) eine Treibmittelkomponente ausgewählt aus der Gruppe umfassend lineare, verzweigte oder cyclische C₁- bis C₆-Kohlenwasserstoffe, lineare, verzweigte oder cyclische C₁- bis C₆-Fluorkohlenwasserstoffe, N₂, O₂, Argon und/oder CO₂, wobei das Treibmittel C) im überkritischen Zustand vorliegt; und
D) eine Polyisocyanatkomponente;
- Austragen der Mischung umfassend A), B), C) und D) aus dem Mischkopf durch eine Austragsleitung,
**dadurch gekennzeichnet, dass**
die gegenüber Isocyanaten reaktive Komponente A) eine Hydroxylzahl von ≥ 100 mg KOH/g bis ≤ 1000 mg KOH/g aufweist,
die Treibmittelkomponente C) zumindest teilweise in Form einer Emulsion vorliegt und
in der Austragsleitung mit einer Öffnung oder mehreren Öffnungen versehene Mittel angeordnet sind, um den Strömungswiderstand beim Austragen der Mischung umfassend A), B), C) und D) zu erhöhen, wobei die Querschnittsfläche der Öffnung oder die Summe der Querschnittsflächen aller Öffnungen ≥ 0,5% bis ≤ 10% der inneren Querschnittsfläche der Austragsleitung beträgt.

2. Verfahren gemäß Anspruch 1, wobei der Quotient des Volumens einer Reaktionskammer innerhalb und/oder außerhalb des Mischkopfs, in der überkritische Bedingungen herrschen, und der Querschnittsfläche der Öffnung oder der Summe der Querschnittsflächen aller Öffnungen ≥ 5 m bis ≤ 200 m beträgt.

3. Verfahren gemäß Anspruch 1, wobei beim Austragen der Mischung umfassend A), B), C) und D) aus den mit einer Öffnung oder mehreren Öffnungen versehenen Mitteln zur Erhöhung des Strömungswiderstandes der Quotient des Volumenstroms der ausgetragenen Mischung und der Querschnittsfläche der Öffnung oder der Summe der Querschnittsflächen aller Öffnungen ≥ 5 m/s bis ≤ 400 m/s beträgt.

4. Verfahren gemäß Anspruch 1, wobei nach dem Bereitstellen der Mischung im Mischkopf ein Druck von ≥ 40 bar bis ≤ 150 bar herrscht.

5. Verfahren gemäß Anspruch 1, wobei die Verweilzeit der Mischung im Mischkopf unter überkritischen Bedingungen des Treibmittels ≥ 0 Sekunden bis ≤ 20 Sekunden beträgt.

6. Verfahren gemäß Anspruch 1, wobei die gegenüber Isocyanaten reaktive Komponente A) ein Polyetheresterpolyol mit einer Hydroxylzahl von ≥ 200 mg KOH/g bis ≤ 600 mg KOH/g und ein kurzkettiges Polyol mit einer Hydroxylzahl von ≥ 800 mg KOH/g umfasst.

7. Verfahren gemäß Anspruch 1, wobei die Tensidkomponente B) ein Polysiloxan-Polyoxyalkylen-Copolymer umfasst.

8. Verfahren gemäß Anspruch 1, wobei der Anteil der Treibmittelkomponente C) ≥ 4 Gewichts-% bis ≤ 12 Gewichts-%, bezogen auf das Gesamtgewicht der Mischung, beträgt.

9. Verfahren gemäß Anspruch 1, wobei die Polyisocyanatkomponente D) monomeres und/oder polymeres Diphenylmethan-4,4'-diisocyanat umfasst.

10. Polyurethanschaum, erhältlich durch ein Verfahren gemäß einem oder mehreren der Ansprüche 1 bis 9.

11. Polyurethanschaum gemäß Anspruch 10 mit einer Rohdichte von ≥ 20 kg/m³ bis ≤ 160 kg/m³.

## Claims

1. Method of producing a polyurethane foam comprising the steps of:
- providing a mixture in a mixing head, said mixture comprising:
A) an isocyanate-reactive component;
B) a surfactant component;
C) a blowing agent component selected from the group comprising linear, branched or cyclic C₁ to C₆ hydrocarbons, linear, branched or cyclic C₁ to C₆ (hydro)fluorocarbons, N₂, O₂, argon and/or CO₂, wherein said blowing agent C) is in the supercritical state; and
D) a polyisocyanate component;
- discharging the mixture comprising A), B), C) and D) from the mixing head through a discharge line,
**characterized in that**
said isocyanate-reactive component A) has a hydroxyl number of ≥ 100 mg KOH/g to ≤ 1000 mg KOH/g,
said blowing agent component C) is at least partly present in the form of an emulsion, and
means having one or more apertures are disposed in the discharge line to elevate the flow resistance during the step of discharging the mixture comprising A), B), C) and D), wherein the cross-sectional area of the aperture or the sum total of the cross-sectional areas of all apertures amounts to ≥ 0.5% to ≤ 10% of the inner cross-sectional area of the discharge line.

2. Method according to Claim 1 wherein the ratio of the volume of a reaction chamber which is inside and/or outside the mixing head and in which supercritical conditions prevail, to the cross-sectional area of the aperture or to the sum total of the cross-sectional areas of all apertures is ≥ 5 m to ≤ 200 m.

3. Method according to Claim 1 wherein the step of discharging the mixture comprising A), B), C) and D) from the flow resistance elevator means having one or more apertures is effected such that the ratio of the volume flow of the discharged mixture to the cross-sectional area of the aperture or to the sum total of the cross-sectional areas of all apertures is ≥ 5 m/s to ≤ 400 m/s.

4. Method according to Claim 1 wherein a pressure of ≥ 40 bar to ≤ 150 bar prevails in the mixing head after the step of providing the mixture.

5. Method according to Claim 1 wherein the mixture in the mixing head has a residence time ≥ 0 seconds to ≤ 20 seconds under supercritical conditions of the blowing agent.

6. Method according to Claim 1 wherein said isocyanate-reactive component A) comprises a polyetherester polyol having a hydroxyl number of ≥ 200 mg KOH/g to ≤ 600 mg KOH/g and a short-chain polyol having a hydroxyl number of ≥ 800 mg KOH/g.

7. Method according to Claim 1 wherein said surfactant component B) comprises a polysiloxane-polyoxyalkylene copolymer.

8. Method according to Claim 1 wherein the proportion of blowing agent component C) is ≥ 4% by weight to ≤ 12% by weight, based on the overall weight of the mixture.

9. Method according to Claim 1 wherein said polyisocyanate component D) comprises monomeric and/or polymeric diphenylmethane 4,4'-diisocyanate.

10. Polyurethane foam obtainable by a method according to one or more of Claims 1 to 9.

11. Polyurethane foam according to Claim 10 with an apparent density of ≥ 20 kg/m³ to ≤ 160 kg/m³.

## Revendications

1. Procédé de fabrication d'une mousse de polyuréthane, comprenant les étapes suivantes :
- la préparation d'un mélange dans une tête de mélange, le mélange comprenant :
A) un composant réactif avec les isocyanates ;
B) un composant tensioactif ;
C) un composant agent gonflant choisi dans le groupe comprenant les hydrocarbures en C₁ à C₆ linéaires, ramifiés ou cycliques, les hydrocarbures fluorés en C₁ à C₆ linéaires, ramifiés ou cycliques, N₂, O₂, l'argon et/ou CO₂, l'agent gonflant C) se présentant à l'état supercritique ; et
D) un composant polyisocyanate ;
- le déchargement du mélange comprenant A), B), C) et D) de la tête de mélange par une conduite de déchargement,
**caractérisé en ce que**
le composant réactif avec les isocyanates A) présente un indice hydroxyle de ≥ 100 mg KOH/g à ≤ 1 000 mg KOH/g,
le composant agent gonflant C) se présente au moins partiellement sous la forme d'une émulsion, et
des moyens munis d'une ouverture ou de plusieurs ouvertures sont agencés dans la conduite de déchargement afin d'augmenter la résistance à l'écoulement lors du déchargement du mélange comprenant A), B), C) et D), la surface de section transversale de l'ouverture ou la somme des surfaces de section transversale de toutes les ouvertures étant de ≥ 0,5 % à ≤ 10 % de la surface de section transversale intérieure de la conduite de déchargement.

2. Procédé selon la revendication 1, dans lequel le quotient du volume d'une chambre de réaction à l'intérieur et/ou à l'extérieur de la tête de mélange, dans laquelle des conditions supercritiques règnent, et de la surface de section transversale de l'ouverture ou de la somme des surfaces de section transversale de toutes les ouvertures est de ≥ 5 m à ≤ 200 m.

3. Procédé selon la revendication 1, dans lequel, lors du déchargement du mélange comprenant A), B), C) et D) des moyens munis d'une ouverture ou de plusieurs ouvertures pour augmenter la résistance à l'écoulement, le quotient du débit volumique du mélange déchargé et de la surface de section transversale de l'ouverture ou de la somme des surfaces de section transversale de toutes les ouvertures est de ≥ 5 m/s à ≤ 400 m/s.

4. Procédé selon la revendication 1, dans lequel une pression de ≥ 40 bar à ≤ 150 bar règne dans la tête de mélange après la préparation du mélange.

5. Procédé selon la revendication 1, dans lequel le temps de séjour du mélange dans la tête de mélange en conditions supercritiques de l'agent gonflant est de ≥ 0 seconde à ≤ 20 secondes.

6. Procédé selon la revendication 1, dans lequel le composant réactif avec les isocyanates A) comprend un polyéther-ester-polyol ayant un indice hydroxyle de ≥ 200 mg KOH/g à ≤ 600 mg KOH/g et un polyol à chaîne courte ayant un indice hydroxyle ≥ 800 mg KOH/g.

7. Procédé selon la revendication 1, dans lequel le composant tensioactif B) comprend un copolymère de polysiloxane-polyoxyalkylène.

8. Procédé selon la revendication 1, dans lequel la proportion du composant agent gonflant C) est de ≥ 4 % en poids à ≤ 12 % en poids, par rapport au poids total du mélange.

9. Procédé selon la revendication 1, dans lequel le composant polyisocyanate D) comprend du 4,4'-diisocyanate de diphénylméthane monomère et/ou polymère.

10. Mousse de polyuréthane, pouvant être obtenue par un procédé selon une ou plusieurs des revendications 1 à 9.

11. Mousse de polyuréthane selon la revendication 10, ayant une densité brute de ≥ 20 kg/m³ à ≤ 160 kg/m³.
